Europäisches Patentamt

European Patent Office

Office européen des brevets

(11) Publication number: **0 522 180 A1**

# EUROPEAN PATENT APPLICATION
## published in accordance with Art. 158(3) EPC

(21) Application number: **92903747.1**

(22) Date of filing: **28.01.92**

(86) International application number:
**PCT/JP92/00077**

(87) International publication number:
**WO 92/13028 (06.08.92 92/21)**

(51) Int. Cl.⁵: **C08J 3/20**

(30) Priority: **28.01.91 JP 26948/91**

(43) Date of publication of application:
**13.01.93 Bulletin 93/02**

(84) Designated Contracting States:
**AT BE CH DE DK ES FR GB GR IT LI LU MC NL SE**

(71) Applicant: **POLYPLASTICS CO. LTD.**
**3-13, Azuchicho, 2-chome**
**Chuo-Ku Osaka-shi Osaka 541(JP)**

(72) Inventor: **TAJIMA, Yoshihisa 687-1, Umegaya**

**Shimizu-shi**
**Shizuoka 424(JP)**
Inventor: **MIYAWAKI, Keiichi 885-11, Miyajima**
**Fuji-shi**
**Shizuoka 416(JP)**
Inventor: **SANO, Hiroyuki 885-11, Miyajima**
**Fuji-shi**
**Shizuoka 416(JP)**

(74) Representative: **Tebbit, Antony Hugh Edward**
**HYDE, HEIDE & O'DONNELL 10-12 Priests Bridge**
**London SW15 5JE(GB)**

(54) STRUCTURE OF POLYACETAL-BASE RESIN COMPOSIITON AND PRODUCTION THEREOF.

(57) A structure of a polyacetal-base resin composition comprising a polyacetal resin and a polyolefin resin added thereto to form a network structure wherein both resins are dispersed in each other and which has good acid resistance and fusibility with a polyolefin resin and excellent mechanical properties. In the step of melt mixing the polyacetal resin (A) as a matrix with the polyolefin resin (B), a filler (C) having a surface tension at least greater than that of the component (B) at the melt mixing temperature and a mean particle diameter of 0.05 to 50 $\mu$m is added in such an amount as to satisfy the relation represented by equations (1): $B/(A + B) = 0.05$-$0.5$ (by weight) and (2): $C/(B + C) = 0.1$-$0.7$ (by weight).

Figure 2

[Field of Industrial Application]

The present invention relates to a structure of a composition comprising a polyacetal resin as the matrix and a polyolefin resin dispersed therein to form a network and a process for producing it. The present invention provides a resin moldings which retains characteristic features of the polyacetal resin, has particularly improved acid resistance, fusibility with the polyolefin resin and mechanical properties, and is produced by a simple method at a low cost.

[Prior Art]

Polyacetal resins are used as the typical engineering resin in various fields, since they have an excellent moldability and well-balanced methanical properties, electrical properties, heat resistance, chemical resistance and frictional wear resistance, and further a fatigue resistance superior to that of other plastic materials. However, as the fields in which-the polyacetal resins are used are widened, more improved or specialized properties are required of them. Examples of the requirements include improvements in or relating to acid resistance and fusibility with other resins. Namely, since the polyacetal resins have an insufficient acid resistance due to their molecular structures, problems are posed in consideration of acid rain in recent years when they are used as the material of the parts of exterior furnishings of automobiles or building elements. In addition, the polyacetal resins exhibit only poor adhesion or fusibility with polyolefin resins due to a high crystallinity thereof. These properties often pose problems when they are used as the material of films laminated with the polyolefin resin, when they are blow-molded or when they are used as the starting material of composite materials.

It was attempted to incorporate another resin therein in order to solve the above-described problems. The incorporation of a polyolefin resin is one example of such attempts. This method would be effective in improving the acid resistance of the polyacetal resin or fusibility thereof with a polyolefin resin. However, after investigations, the inventors have found that when the polyolefin resin is merely incorporated into the polyacetal resin, the polyolefin resin phase is dispersed in the form of islands in the polyacetal resin and, therefore, improvements in the acid resistance and fusibility thereof with the polyolefin resin are yet insufficient. Thus the incorporation of a large amount of the polyolefin resin is indispensable to thereby impair the essential mechanical properties and frictional wear resistance of the polyacetal resin.

An object of the present invention is to overcome the defects due to the dispersion behaviors of the polyolefin resin and the polyacetal resin when the former is dispersed in the latter, to retain the characteristic essential properties of the polyacetal resin even after molding, and to further improve the acid resistance and fusibility of the polyacetal resin with the polyolefin resin.

[Disclosure of the Invention]

After intensive investigations made for the purpose of improving the dispersion state of a polymer blend of the polyacetal resin and the polyolefin resin in order to attain the above-described object, the inventors have found that a structure comprising the polyolefin resin dispersed in the polyacetal resin to form a network is obtained by using a specified filler and regulating the relative surface tensions of the components in the melt-kneading step and that the network structure thus formed exhibits excellent acid resistance and fusibility with the polyolefin resin and retains the essential mechanical properties of the polyacetal resin. The present invention has been completed on the basis of these findings.

Namely, the present invention relates to a process for producing a structure of a composition in which a polyacetal resin A and a polyolefin resin B interpenetrate into each other to form a dispersion having a network structure, characterized in that in the melt-kneading of the polyacetal resin A as the matrix with the polyolefin resin B, a filler C having a surface tension which is at least higher than that of the component B at the melt-kneading temperature and an average particle diameter of 0.05 to 50 $\mu$m is melt-kneaded in amounts satisfying the following formulae (1) and (2), and a moldings comprising the structure of the polyacetal resin composition obtained by this process:

$$B/(A + B) = 0.05 \text{ to } 0.5 \text{ (weight ratio)} \quad (1)$$

$$C/(B + C) = 0.1 \text{ to } 0.7 \text{ (weight ratio)} \quad (2).$$

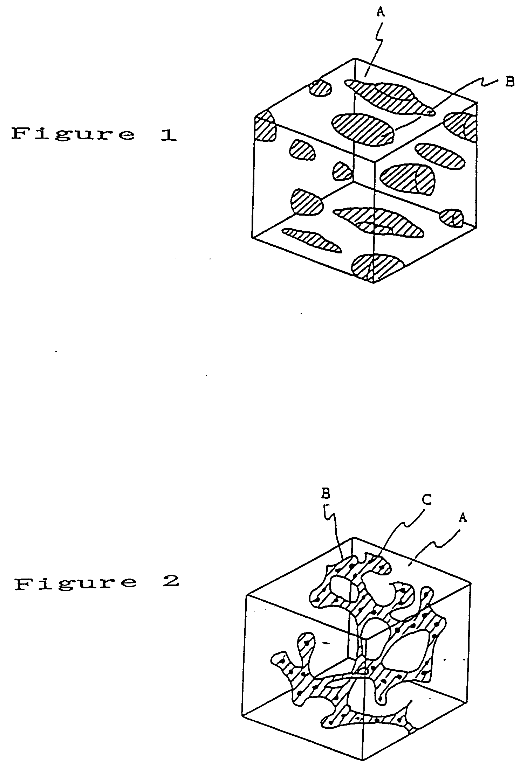

Now description will be made on the dispersion state of the interpenetrating network structure. Fig. 1 is a schematic view of the dispersion state of an ordinary polymer blend, wherein a polyolefin resin B in an amount smaller than that of a polyacetal resin A as the matrix resin is dispersed in the form of particles or layers. Fig. 2 is a schematic view of the interpenetrating network structure of the present invention, wherein a specified filler C is contained in the polyolefin resin B, and the polyacetal resin A and the polyolefin resin B form together a network, i.e. an intertwined structure, which is substantially a continuous phase, though the amount of the polyolefin resin B contained therein is only small.

Namely, in the present invention, at least part, usually most, of the effective amount of the polyolefin resin B forms a substantially continuous network structure in the polyacetal resin A. The present invention is characterized by this dispersion state. The above-described problems can be solved by the incorporation of a relatively small amount of the polyolefin resin.

Such a dispersion structure can be confirmed by, for example, suitably pulverizing or cutting the pieces of the structure, e.g. a molding, and adding them to a hydrochloric acid solution to decompose and remove the matrix component A. When the component B is dispersed to form the network structure, it remains as it is after the matrix A has been decomposed and removed, while when it is dispersed in the form of particles or layers, its shape is broken beyond recognition. This fact proves the network structure of the present invention. A rough quantitative determination of the network is possible by separating the residue remaining after the decomposition of the matrix with a suitable sieve.

Now description will be made on the components to be used in the present invention.

The polyacetal resin usable as the component A in the present invention is a polymeric compound comprising oxymethylene groups (-CH$_2$O-) as the main constituting unit. They include polyoxymethylene homopolymers, and copolymers, terpolymers and block copolymers containing a small amount of constituting units other than the oxymethylene group. The molecules may have not only a linear structure but also a branched or crosslinked structure. The degree of polymerization of them is not particularly limited so far as they have a moldability (for example, a melt flow index of 1.5 to 70 at 190°C under a load of 2160 g).

The polyolefin resin usable as the component B in the present invention has a surface tension which is at least higher than that of the polyacetal resin A, preferably at least 2 dyn/cm.

They include ethylene and α-olefin polymers such as high-density polyethylene, medium-density polyethylene, low-density polyethylene, polypropylene, polybutene-1, poly-3-methylbutene-1 and poly-4-methylpentene-1; copolymers of two or more of ethylene and α-olefins; or, copolymers of one or more of ethylene and α-olefins with vinyl esters such as vinyl acetate and the like, acrylic acid, methaerylic acid or derivatives of them (i.e. methyl acrylate, methyl methacrylate, dimethylaminoethylacrylamide and the like) or dienes such as butadiene and isoprene.

Particularly preferred are polymers comprising ethylene as the main constituting unit, i.e. polyethylene and copolymers comprising ethylene as the main constituting unit and a vinyl ester such as vinyl acetate, acrylic acid, methaerylic acid or an ester thereof as a comonomer component.

Any of copolymers, terpolymers and block copolymers containing a small amount of a crosslinking agent or other modifiers may be used. The molecule may have not only a linear structure but also a branched or crosslinked structure. The degree of polymerization of the polymer is not particularly limited and the polymer having any degree of polymerization can be used so far as it is thermoplastic and melt-processable.

As for the proportion of the component A to the component B in the present invention, the amount of the component B is 5 to 50% preferably 10 to 40%, based on the sum of the components A and B. When the amount of the component B is insufficient, the intended effect of the present invention, i.e. improvement in acid resistance and fusibility with the polyolefin resin, cannot be obtained and, on the contrary, when it is excessive, the essential properties of the polyacetal resin disappear unfavorably.

The surface tension of the component C must be at least higher than that of the component B at the melt-kneading temperature. Preferably the surface tension of the component C is higher than that of the component B by at least 2 dyn/cm.

The surface tension must be determined at the melt-kneading temperature in the present invention. The surface tension of a thermoplastic resin can be determined by the hanging drop method at that temperature which is usually and broadly employed. In this method, a tube is vertically stood and the surface tension of the liquid is estimated from the shape and behavior of the drops of the sample put therein and hanging at the edge of the tube. The critical surface tension of the nonmelting component C can be determined by the contact angle method through calculation based on Zisman plot (the details will be described in Examples given below).

The surface tension of the polyacetal resin A at 190°C is about 21 dyn/cm and that of the polyolefin resins is usually 22 to 32 dyn/cm (for example, that of polyethylene is 26 dyn/cm and that of acryl-modified polyethylene is about 28 dyn/cm) which is above that of the polyacetal resin A. Therefore, the surface tension of the component C must be higher than that of the component B and is preferably as high as possible when they are kneaded at 190°C.

The average particle diameter (or average fiber length) of the filler used as the component C in the form of particles or fiber is preferably 0.05 to 50 $\mu$m. Still preferably, the average particle diameter ranges from 0.1 to 10 $\mu$m. For forming the fine network structure, the smaller the particle diameter, the better the results.

The amount of the component C is 10 to 70%, preferably 20 to 60%, based on the sum of the components B and C. When it is insufficient, the effect of the present invention cannot be fully exhibited and, on the contrary, when it is excessive, undesirable effects are excerted on the properties.

The network dispersion form of the present invention is supposedly formed as follows: when the melt-kneading is conducted in the presence of the component C satisfying the above-described conditions, the particles of the component C are selectively enclosed by the component B according to the relative surface tensions of them, then the component B enclosing a large number of the particles of the component C extends to form branches in cooperation with the movement and dispersion of the component C by the kneading and the branches are connected with each other to form the network structure.

The filler as the component C may be an inorganic or organic filler so far as the above-described conditions are satisfied and particularly the surface tension thereof is higher than that of the component B at the melt-kneading temperature. The shape of the filler is not particularly limited and it may be in the form of fiber, particle or plate. The filler may be in any other form depending on the purpose.

Examples of the inorganic fillers C include inorganic fibrous materials having an average fiber length of 50 $\mu$m or less, such as glass, asbestos, silica, silica/alumina, alumina, zirconia, boron nitride, silicon nitride, boron and potassium titanate fibers; and fillers in the form of particle or plate having an average diameter of 50 $\mu$m or less, such as carbon black; graphite; silica; quartz powder; glass beads; milled glass fiber; glass baloons; glass powder; silicates such as calcium silicate, aluminum silicate, kaolin, talc, clay, diatomaceous earth and wollastonite; metal oxides such as iron oxide, titanium oxide, zinc oxide, antimony trioxide and alumina; metal carbonates such as calcium carbonate and magnesium carbonate; metal sulfates such as calcium sulfate and barium sulfate; ferrite; silicon carbide; silicon nitride; boron nitride; mica; and glass flakes. The component C is suitably selected in due consideration of the surface tension as compared with that of the component B.

Examples of the organic fillers C include heat-resistant thermoplastic resins and thermosetting resins each having a high melting point and satisfying the above-described conditions. Examples of them include aromatic polyester resins, aromatic polyamide resins, aromatic polyimide resins, polystyrene resins, acrylic resins, MBS resins, melamine resins, phenol resins and epoxy resins so far as they satisfy the above-described conditions as the component C. These fillers can be used either singly or in combination of two or more of them.

These fillers can be used as the component C after, if necessary, surface-treated with a suitable surface treatment to control the surface tension thereof.

The structure of the composition of the present invention may contain known additives such as lubricant, slip additive, nucleating agent, dye, pigment, releasing agent, antioxidant, heat stabilizer, weathering (light) stabilizer, reinforcing agent, hydrolytic stabilizer, thermoplastic resin other than the component A or B and filler other than the component C in order to achieve desired properties so far as the object of the invention is not impaired.

The structure of the composition of the present invention can be produced by various known processes wherein the three components A, B and C are molten by heating and kneaded for at least 30 sec. Other components may be incorporated therein together with these three components or separately from them. More specifically, for example, the components A, B and C are homogeneously mixed on a mixer such as a tumbler or Henschel mixer and then melt-kneaded on a single-screw or double-screw extruder to form pellets, which are molded or, alternatively, they are directly molded.

The melt-kneading is herein conducted at the melting temperature and at a shear rate of desirably at least 40 sec$^{-1}$, particularly 100 to 500 sec$^{-1}$.

The treatment temperature is higher than the melting temperature of the resin components by 5 to 100°C, particularly desirably by 10 to 60°C. When the temperature is too high, undesirable decomposition and abnormal reactions occur.

The melt-kneading time ranges from 30 sec to 15 min, preferably 1 to 10 min.

In the structure of the polyacetal resin composition of the present invention, the polyolefin resin is dispersed to form a network in the polyacetal resin. This structure can be formed by a simple process and it retains the characteristic properties of the polyacetal resin and has further improved mechanical properties, acid resistance and fusibility with the polyolefin resin, since the dispersibility of the polyolefin resin is improved and superior to that of the ordinary mere polyolefin resin-containing composition. Thus the use thereof in a wider range is expected.

[Brief Description of Drawings]

Fig. 1 is a schematic view of the dispersion state of the structure of an ordinary polymer blend.

Fig. 2 is a schematic view of the dispersion state of the structure of the present invention.

Fig. 3 is an electron photomicrograph of the particle structure (network structure) obtained after treating the structure of the present invention (Example 1) with a hydrochloric acid solution.

[Examples]

The following Examples will further illustrate the present invention, which by no means limit the invention.

Examples 1 and 2

Polyacetal resin (A) (Duracon; a product of Polyplastics Co., Ltd.), an acrylic ester-modified polyethylene resin (EEA) (B) (a product of Nippon Unicar Co., Ltd.) and acrylic robber particles (C) (a product of Mitsubishi Rayon Co., Ltd., having an average particle diameter of 0.3 or 30 μm) each having a surface tension (190°C) as specified in Table 1 were mixed together in a ratio as specified in Table 1 and then kneaded on a 30 mm double-screw extruder at a screw rotation rate of 80 rpm (shear rate: about 100 sec$^{-1}$) while the temperature was kept at 190°C to form pellets. Then test pieces were prepared from the pellets on an injection molding machine and the properties of them were evaluated by methods which will be described below. The results are given in Table 1.

Determination of surface tension

The surface tension of each of the polyacetal resin and polyolefin resin was determined by the hanging drop method [described on pages 78 and 79 of "Shin-Jikken Kagaku Koza (New Experimental Science Cource)", Vol. 18, "Kaimen to Koroido (Interface and Colloid)" published by Maruzen Co., Ltd. in 1977] with an automatic surface-tensimeter PD-Z (a product of Kyowa Kaimen Kagaku K.K.) at an atmospheric temperature of 190°C. The surface tension of the polyacetal resin was 21 dyn/cm and that of the acrylic ester-modified polyethylene resin was 28 dyn/cm.

The acrylic rubber particles were pressed with a pressing machine into a film at 200°C and the critical surface tension thereof was determined at various temperatures by the contact angle method [described on pages 93 to 106 of "Shin-Jikken Kagaku Koza (New Experimental Science Cource), Vol. 18, "Kaimen to Koroido (Interface and Colloid)" published by Maruzen Co., Ltd. in 1977] with an automatic contact angle meter CA-Z (a product of Kyowa Kaimen Kagaku K.K) to determine the temperature coefficient. The results were as given below. The surface tension of the acrylic rubber particles at 190°C was calculated at 30 dyn/cm.

| surface tension at 25°C: | 42 dyn/cm |
| surface tension at 60°C: | 39.5 dyn/cm |
| surface tension at 80°C: | 38 dyn/cm |
| temperature gradient (-dr/dT) = 0.072 dyn/cm | |

Method of confirmation of the network structure

The molding was cut into pieces each having a size of 10 × 10 × 3 mm, put in a hydrochloric acid/ethanol solution (volume ratio of 32 N hydrochloric acid to ethanol : 1/3) and refluxed at 80°C for 12 h to decompose and dissolve the polyacetal resin A as the matrix resin. The residue was observed with the naked eye and under an optical microscope and an electron microscope to notice the change in shape.

When the polyolefin resin B comprises a dispersion of the particles as in the ordinary resin, the original shapes of the piece of the molding are not retained but only precipitates of the polyolefin resin B particles are observed.

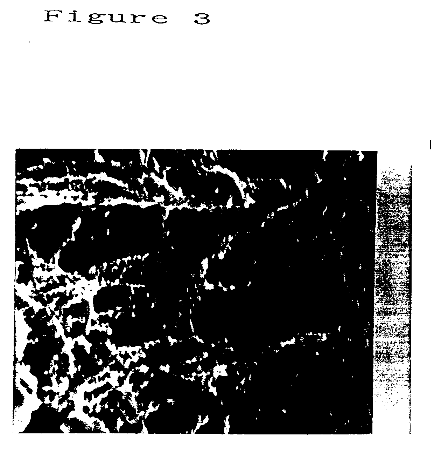

On the contrary, when the polyolefin resin B has the interpenetrating network structure as in the present invention, the pieces of the molding retain their original shapes even after the polyacetal resin A as the matrix resin has been decomposed and removed, which can be confirmed with the naked eye or under an optical microscope. The interpenetrating network structure thus formed can be recognized by observation under magnification with a scanning electron microscope. Fig. 3 is an electron photomicrograph of the particle structure (network structure) obtained after the dissolution treatment of the structure of the composition obtained in the Example 1.

The quantitative determination of the network structure was conducted as follows: after the acid treatment conducted as described above, the sample was sieved through a 12-mesh sieve and the residue was weighed. The network structure part remained, though the dispersed particles had passed through the sieve. The residue (% by weight) refer to the weight of (B + C) in the network structure parts .

Tensile strength and elongation

The tensile strength and elongation were determined according to the method of ASTM D-638.

Impact strength

The impact strength was determined according to the method of ASTM D-256.

Fusibility

Test pieces each having a thickness of 1 mm were prepared on a pressing machine at 200°C. Each test piece was placed on a polyethylene test piece prepared in the same manner as above and fused on a pressing machine at 200°C under a pressure of 50 kg/cm$^2$ for 2 min and quenched with cold water. The sample having a thickness of 1 mm thus obtained was examined according to the method of JIS C 6481.

Determination of acid resistance

The pieces of the molding were immersed in a 20% aqueous sulfuric acid solution at room temperature for a predetermined time and cracks formed on the surface thereof were macroscopically observed. Comparative Examples 1 to 4

The same procedure as that of the Example 1 was repeated except that the polyacetal resin A was used singly, the acrylic ester-modified polyethylene resin B was used singly, a combination of the resins A and B free of the component C was used or a combination of the resins A and B and component C having a particle diameter outside the scope of the present invention was used. The results are given in Table 1. Examples 3 to 6 and Comparative Examples 5 to 8

The same procedure as that of the Example 1 was repeated except that the amounts of the components A, B and C were altered as specified in Table 2. The results are given in Table 2.

Examples 7 and 8 and Comparative Example 9

A composition was prepared in the same manner as that of the Example 1 except that polyamide particles (a product of Toray-Industries, Inc.; average particle diameter: 7 $\mu$m), calcium carbonate (a product of Shiraishi Kogyo K.K.; average particle diameter: 1 $\mu$m) or silicone rubber particles (a product of Toray Silicone Co., Ltd.; average particle diameter: 1 $\mu$m) were used as the filler C. It was molded and evaluated. The results re given in Table 3.

Example 9 and Comparative Example 10

A composition was prepared, molded and evaluated in the same manner as that of the Example 1 except that the acrylic ester-modified polyethylene resin used as the component B was replaced with vinyl acetate-modified polyethylene resin (EVA) (a product of Nippon Unicar Co., Ltd.). The results are given in Table 4.

Table 1

| | Surface tension | Unit | Ex. 1 | Ex. 2 | Comp. Ex. 1 | Comp. Ex. 2 | Comp. Ex. 3 | Comp. Ex. 4 |
|---|---|---|---|---|---|---|---|---|
| (A) Polyacetal | 21 | pt. by wt. | 85 | 85 | 100 | — | 85 | 85 |
| (B) EEA | 28 | ditto | 15 | 15 | — | 100 | 15 | 15 |
| (C) Acrylic rubber particle (average diameter: 0.3 μm) | 30 | ditto | 5 | — | — | — | — | — |
| (C) Acrylic rubber particle (average diameter: 30 μm) | 30 | ditto | — | 5 | — | — | — | — |
| (C) Acrylic rubber particle (average diameter: 60 μm) | 30 | ditto | — | — | — | — | — | 5 |
| Shape after treatment with HCl soln. | | — | retained | partially retained | completely decomposed | unchanged | not retained | not retained |
| Wt. of residue on the sieve after treatment with HCl soln. | | pt. by wt. (%)* | 18 (90) | 14 (70) | 0 | 100 (100) | 0 | 0 |
| Fusion strength | | kg/cm | 1.0 | 0.7 | 0 | 2.0 | 0.1 | 0.2 |
| Tensile strength | | kg/cm$^2$ | 430 | 422 | 634 | 74 | 437 | 412 |
| Tensile elongation | | % | 300< | 300< | 65 | 300< | 104 | 106 |
| Izod impact strength (notched) | | kgcm/cm | 12.4 | 11.6 | 6.0 | 40< | 6.3 | 9.7 |
| Acid resistance (crack formation) | | — | none | none | observed | none | observed | slight |

* % based on (B) + (C)

EP 0 522 180 A1

Table 2

|  | Surface tension | Unit | Ex. 3 | Ex. 4 | Ex. 5 | Ex. 6 | Comp. Ex. 5 | Comp. Ex. 6 | Comp. Ex. 7 | Comp. Ex. 8 |
|---|---|---|---|---|---|---|---|---|---|---|
| (A) Polyacetal | 21 | pt. by wt. | 95 | 95 | 70 | 75 | 95 | 100 | 70 | 70 |
| (B) EEA | 28 | ditto | 5 | 5 | 30 | 25 | 5 | – | 30 | 30 |
| (C) Acrylic rubber particle (average diameter: 0.3 μm) | 30 | ditto | 2 | 5 | 10 | 15 | – | 5 | – | 1 |
| Shape after treatment with HCl soln. |  | – | retained | retained | retained | retained | not retained | not retained | not retained | not retained |
| Wt. of residue on the sieve after treatment with HCl soln. |  | pt. by wt. (%)* | 6 (85) | 5 (50) | 38 (95) | 36 (90) | 0 | 0 | 0 | 0 |
| Fusion strength |  | kg/cm | 0.5 | 0.6 | 1.4 | 1.8 | 0 | 0 | 0.2 | 0.3 |
| Tensile strength |  | kg/cm² | 540 | 534 | 277 | 285 | 559 | 548 | 281 | 276 |
| Tensile elongation |  | % | 86 | 80 | 300< | 300< | 54 | 60 | 250 | 280 |
| Izod impact strength (notched) |  | kgcm/cm | 7.2 | 7.6 | 19.5 | 18.7 | 5.1 | 5.5 | 12.9 | 13.3 |
| Acid resistance (crack formation) |  | – | slight | slight | none | none | observed | observed | a little | slight |

* the same as that of Table 1

8

Table 3

| Surface tension | Unit | Ex. 7 | Ex. 8 | Comp. Ex. 9 |
|---|---|---|---|---|
| (A) Polyacetal 21 | pt. by wt. | 85 | 85 | 85 |
| (B) EEA 28 | ditto | 15 | 15 | 15 |
| (C) Polyamide particle (average diameter: 0.7 $\mu$m) 36 | ditto | 5 | - | - |
| (C) Calcium carbonate (average diameter: 1 $\mu$m) 65 | ditto | - | 5 | - |
| (C) Silicone rubber particle (average diameter: 1 $\mu$m) 10 | ditto | - | - | 5 |
| Shape after treatment with HCl soln.<br>Wt. of residue on the sieve after treatment with HCl soln. | -<br>pt. by wt. (%)* | retained<br>18 (90) | retained<br>15 (75) | not retained<br>0 |
| Fusion strength | kg/cm | 1.1 | 0.8 | 0.2 |
| Tensile strength | kg/cm$^2$ | 438 | 459 | 421 |
| Tensile elongation | % | 300< | 110 | 150 |
| Izod impact strength (notched) | kgcm/cm | 10.3 | 9.8 | 8.2 |
| Acid resistance (crack formation) | - | none | none | observed |

* the same as that of Table 1

Table 4

| Surface tension | Unit | Ex. 9 | Comp. Ex. 10 |
|---|---|---|---|
| (A) Polyacetal 21 | pt. by wt. | 85 | 85 |
| (B) EVA 28 | ditto | 15 | 15 |
| (C) Acrylic rubber particle (average diameter: 0.3 $\mu$m) 30 | ditto | 5 | - |
| Shape after treatment with HCl soln.<br>Wt. of residue on the sieve after treatment with HCl soln. | -<br>pt. by wt. (%)* | retained<br>18 (90) | not retained<br>0 |
| Fusion strength | kg/cm | 0.9 | 0.2 |
| Tensile strength | kg/cm$^2$ | 371 | 365 |
| Tensile elongation | % | 300< | 300 |
| Izod impact strength (notched) | kgcm/cm | 12.1 | 6.5 |
| Acid resistance (crack formation) | - | a little | observed |

* the same as that of Table 1

## Claims

1. A process for producing a structure of a composition in which a polyacetal resin A and a polyolefin resin B interpenetrate into each other to form a dispersion having a network structure, characterized in that in the melt-kneading of the polyacetal resin A as the matrix with the polyolefin resin B, a filler C having a surface tension which is at least higher than that of the component B at the melt-kneading temperature and an average particle diameter of 0.05 to 50 $\mu$m is melt-kneaded in amounts satisfying the following formulae (1) and (2):

B/(A + B) = 0.05 to 0.5 (weight ratio)     (1)

C/(B + C)  =  0.1 to 0.7 (weight ratio)      (2).

2.  A process for producing a structure of a composition according to Claim 1, wherein the surface tension of the polyolefin resin B at the melt-kneading temperature is higher than that of the polyacetal resin A.

3.  A process for producing a structure of a resin composition according to Claim 1, wherein the surface tension of the filler C at the melt-kneading temperature is higher than that of the polyolefin resin B by at least 2 dyn/cm.

4.  A process for producing a structure of a resin composition according to Claim 1, wherein the polyolefin resin B is a polyethylene or a copolymer comprising polyethylene as the main component.

5.  A molding comprising the structure of the resin composition produced by the process set forth in Claim 1.

Figure 1

Figure 2

11

Figure 3

# INTERNATIONAL SEARCH REPORT

International Application No PCT/JP92/00077

| I. CLASSIFICATION OF SUBJECT MATTER (if several classification symbols apply, indicate all) 6 |
|---|

According to International Patent Classification (IPC) or to both National Classification and IPC

Int. Cl$^5$  C08J3/20

| II. FIELDS SEARCHED |
|---|

| Minimum Documentation Searched 7 | |
|---|---|
| Classification System | Classification Symbols |
| IPC | C08J3/20, C08L59/00-59/04 |

Documentation Searched other than Minimum Documentation
to the Extent that such Documents are Included in the Fields Searched 8

| III. DOCUMENTS CONSIDERED TO BE RELEVANT 9 | | |
|---|---|---|
| Category * | Citation of Document, 11 with indication, where appropriate, of the relevant passages 12 | Relevant to Claim No. 13 |
| A | JP, A, 60-223852 (Polyplastics Co., Ltd.), November 8, 1985 (08. 11. 85), & US, A, 4649172 & EP, B1, 159904 | 1-5 |
| A | JP, A, 53-108142 (Toray Industries, Inc.), September 20, 1978 (20. 09. 78), (Family: none) | 1-5 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

| IV. CERTIFICATION | |
|---|---|
| Date of the Actual Completion of the International Search | Date of Mailing of this International Search Report |
| April 15, 1992 (15. 04. 92) | May 12, 1992 (12. 05. 92) |
| International Searching Authority | Signature of Authorized Officer |
| Japanese Patent Office | |

Form PCT/ISA/210 (second sheet) (January 1985)